# FASCICULE DE BREVET EUROPEEN

(11) **EP 1 011 995 B1**
(45) Date de publication et mention de la délivrance du brevet: **03.03.2004**
(21) Numéro de dépôt: 98943947.6
(22) Date de dépôt: 09.09.1998
(51) Int. Cl.: B60J 5/10

(54) **OUVRANT DE VEHICULE AUTOMOBILE, SON PROCEDE DE FABRICATION ET VEHICULE AUTOMOBILE EQUIPE D'UN TEL OUVRANT**
KLAPPE EINES FAHRZEUGES, DESSEN HERSTELLUNGSVERFAHREN UND FAHRZEUG MIT SOLCHER KLAPPE
MOTOR CAR SLIDING ROOF, METHOD FOR MAKING SAME AND MOTOR VEHICLE EQUIPPED WITH SUCH A ROOF

(30) Priorité: 11.09.1997 FR 9711520
(43) Date de publication de la demande: 28.06.2000
(73) Titulaire: Inoplast, 07340 Saint Desirat (FR)
(72) Inventeur: MARTIN, Laurent, F-07340 Peaugres (FR)
(74) Mandataire: Myon, Gérard Jean-Pierre
(86) Numéro de dépôt international: PCT/FR1998/001923
(87) Numéro de publication internationale: WO 1999/012758

(56) Documents cités:
- EP-A- 0 111 457
- EP-A- 0 340 180
- FR-A- 2 695 877
- GB-A- 2 078 628
- US-A- 4 822 098
- US-A- 5 449 213

## Description

L'invention a trait à un procédé de fabrication d'un ouvrant d'un véhicule automobile, à un ouvrant de véhicule automobile et à un véhicule automobile équipé d'un tel ouvrant.

Un ouvrant de véhicule automobile est une partie de la carrosserie, mobile entre une position dans laquelle elle permet l'accès à l'intérieur de ce véhicule et une position dans laquelle elle interdit cet accès. En pratique, un ouvrant de véhicule automobile peut être une porte, un hayon arrière, un capot ou un coffre.

Il est connu de réaliser des ouvrants de véhicule automobile en tôle. Il est également connu de réaliser des ouvrants en matériau plastique, en particulier pour les véhicules produits en série spéciale ou limitée. Cependant, pour les véhicules produits en grande série, le prix de revient d'un ouvrant réalisé en matériau plastique est, le plus souvent, sensiblement supérieur à celui d'une pièce équivalente réalisée en tôle, de sorte que la tôle est souvent préférée.

Or, un ouvrant en tôle est généralement plus lourd qu'un ouvrant en matière plastique. De plus, certaines géométries sont plus faciles à obtenir avec un matériau plastique qu'avec une feuille de tôle emboutie. Enfin, les propriétés d'absorption des chocs des matériaux plastiques sont supérieures à celles de la tôle. Pour toutes les raisons qui précèdent, il est souhaitable de pouvoir réaliser des ouvrants de véhicule automobile en matière plastique dont le prix de revient est sensiblement équivalent à celui d'un ouvrant réalisé en tôle, y compris pour des fabrications en grande série.

Par le brevet US-A-4,822,098, on connaît un hayon arrière de véhicule automobile formé de deux coques en matériau thermoplastique assemblées par un revêtement adhésif. Un moteur d'essuie-glace est installé sur une face interne de la coque interne, de sorte qu'il est exposé à d'éventuels chocs dus à des objets se trouvant dans le coffre. Une plaque de carton est prévue sur la face interne du hayon pour servir de cache. Une telle plaque est peu résistante et peut être endommagée par ces objets en cours de déplacement.

C'est à ces problèmes qu'entend plus particulièrement remédier l'invention en proposant un procédé de fabrication d'un ouvrant de véhicule automobile permettant de diminuer le prix de revient unitaire de chaque ouvrant, tout en garantissant des propriétés mécaniques et esthétiques de l'ouvrant conformes aux règles de l'art dans le domaine de l'industrie automobile, alors que des équipements de l'ouvrant sont efficacement protégés par rapport à leur environnement.

Dans cet esprit, l'invention concerne un procédé de fabrication d'un ouvrant de véhicule automobile, qui consiste à réaliser une armature en matériau plastique composite comprenant au moins une chambre dont l'ouverture est tournée vers l'extérieur, à installer sur l'armature des équipements et à monter sur cette armature un panneau de finition apte à obturer l'ouverture de cette chambre (Procédé du type selon US-A-4 822 098), caractérisé en ce que ces équipements de signalisation ou de sécurité et/ou des faisceaux d'alimentation d'équipement sont installés dans ladite chambre.

Grâce au procédé de l'invention, l'ouvrant comprend deux pièces principales, à savoir l'armature et le panneau de finition, qui peuvent être réalisées séparément dans des matériaux composites adaptés à leur fonction, alors que le montage des équipements de signalisation ou de sécurité est particulièrement aisé puisqu'il a lieu dans une chambre qui peut être de dimensions importantes et donc d'accès facile pour un opérateur ou un robot. Une fois le hayon assemblé, ces équipements sont efficacement protégés par rapport à leur environnement extérieur, notamment en cas de choc sur l'ouvrant. Le temps de pose de ces équipements et de leurs faisceaux d'alimentation est fortement diminué par rapport aux dispositifs connus de l'art antérieur dans lesquels ces équipements devaient être mis en place dans l'espace intérieur d'une coque ou armature à travers des trappes de faibles dimensions. En outre, le procédé de l'invention permet de prévoir une armature dans une couleur unique ou dans quelques couleurs pour un type de véhicule, indépendamment de la couleur de là carrosserie du véhicule. En revanche, l'aspect extérieur du panneau de finition peut être harmonisé avec la teinte de la carrosserie des véhicules considérés.

Selon un premier aspect avantageux, le procédé comprend une étape de traitement de l'aspect du panneau de finition préalable à son montage sur l'armature. Ainsi, la mise en peinture du panneau de finition peut être réalisée à part, avant son montage sur l'armature, sans interférence, avec l'armature. En particulier, il n'est pas nécessaire de protéger l'armature par des caches ou des bandes d'adhésif lors du revêtement du panneau de finition puisque, lors de ce revêtement, le panneau de finition n'est pas encore solidaire de l'armature. En outre, si l'on prévoit d'assembler le panneau de finition et l'armature grâce à une colle structurelle, cet assemblage étant réalisé après le revêtement du panneau de finition, la colle utilisée supporte moins de contraintes par effet thermique et n'est pas dégradée.

L'invention concerne également un ouvrant de véhicule automobile qui peut être obtenu grâce au procédé décrit ci-dessus. Plus spécifiquement, l'invention concerne un ouvrant de véhicule automobile, qui comprend une armature- en matériau plastique composite constituant la face interne de cet ouvrant, cette armature définissant au moins une chambre ouverte dont l'ouverture est tournée vers- l'extérieur, et au moins un panneau de finition, ce panneau étant apte à être monté sur l'armature de façon à obturer l'ouverture de la chambre, caractérisé en ce que la chambre ouverte sert à la réception d'équipements de l'ouvrant.

L'ouvrant de l'invention est de fabrication simple et rapide, de sorte que son prix de revient peut être fortement diminué par rapport à celui des ouvrants ou hayons en matériau composite connus de l'art antérieur. En particulier, le fait que l'armature constitue la face interne du hayon permet de se dispenser de la fabrication et du montage d'un habillage interne pour cet ouvrant. L'utilisation d'un panneau de finition rapporté permet une grande modularité dans l'adaptation de l'aspect extérieur du hayon à la couleur de la carrosserie du véhicule auquel il est destiné. Les équipements montés sont protégés à l'intérieur de la chambre définie par l'armature.

Selon un premier aspect avantageux, l'armature comprend un orifice destiné à être fermé par une vitre, cet orifice étant bordé par au moins un montant latéral, ce montant latéral ayant une section transversale globalement en forme de C et recevant des équipements de signalisation ou de sécurité et/ou des faisceaux d'alimentation de ces équipements. Grâce à cet aspect de l'invention, le ou les montants latéraux peuvent être facilement équipés du fait de leur section en C, ce qui diminue le temps de montage de l'ouvrant par rapport aux dispositifs de l'art antérieur.

Dans ce cas, on peut prévoir que la vitre est opaque dans sa zone de recouvrement de chaque montant latéral. Grâce à cet aspect de l'invention, la vitre joue un rôle de finition, de sorte qu'il n'est pas nécessaire de prévoir un panneau d'obturation sur l'ouverture du ou des montants latéraux.

Selon un autre aspect avantageux, l'armature comprend les moyens d'articulation sur la caisse du véhicule, ces moyens étant ménagés dans le fond de la chambre définie par l'armature. Grâce à cet aspect de l'invention, les moyens d'articulation sont relativement faciles à mouler et accessibles aisément par l'extérieur du véhicule lors du montage de l'ouvrant sur la caisse alors qu'ils sont ensuite dissimulés grâce au panneau de finition.

De façon avantageuse, l'armature définit une seconde chambre de réception d'équipements de signalisation ou de sécurité et/ou de faisceaux d'alimentation de ces équipements, un bandeau étant apte à obturer une ouverture de cette seconde chambre tournée vers l'extérieur. Le bandeau joue ainsi le rôle d'un second panneau de finition.

Suivant un autre aspect avantageux, le panneau de finition et/ou le bandeau sont montés de façon amovible sur l'armature. Ceci permet de prévoir leur échange standard en cas de choc sur l'ouvrant ayant entraîné un défaut d'aspect. L'invention permet donc de prévoir de ne changer que le panneau de finition et/ou le bandeau alors que l'armature reste en place sur le véhicule. Cette approche diminue considérablement les coûts de réparation d'un véhicule équipé d'un tel ouvrant.

Selon les choix du constructeur et en fonction des propriétés mécaniques recherchées, l'armature peut être réalisée en résine thermodurcissable chargée en fibres de renfort, en polypropylène chargé en fibres de renfort ou en résine thermoplastique chargée en fibres de renfort.

L'invention concerne enfin un véhicule automobile équipé d'un ouvrant tel que précédemment décrit. Un tel véhicule automobile est d'un prix de revient inférieur à ceux de l'art antérieur qui sont équipés d'ouvrants en matériau composite.

L'invention sera mieux comprise et d'autres avantages de celle-ci apparaîtront plus clairement à la lumière de la description qui va suivre d'un mode de réalisation d'un ouvrant de véhicule automobile conforme à son principe et de son procédé de fabrication, donnée uniquement à titre d'exemple et faite en référence aux dessins annexés dans lesquels :
- la figure 1 est une vue en perspective éclatée d'un hayon conforme à l'invention ;
- la figure 2 est une coupe centrale du hayon de la figure 1 en vue éclatée ;
- la figure 3 est une coupe analogue à la figure 2 pour un hayon monté ;
- la figure 4 est une coupe selon la ligne IV-IV à la figure 3 et
- la figure 5 est un schéma-blocs de principe du procédé de fabrication de l'ouvrant des figures 1 à 4.

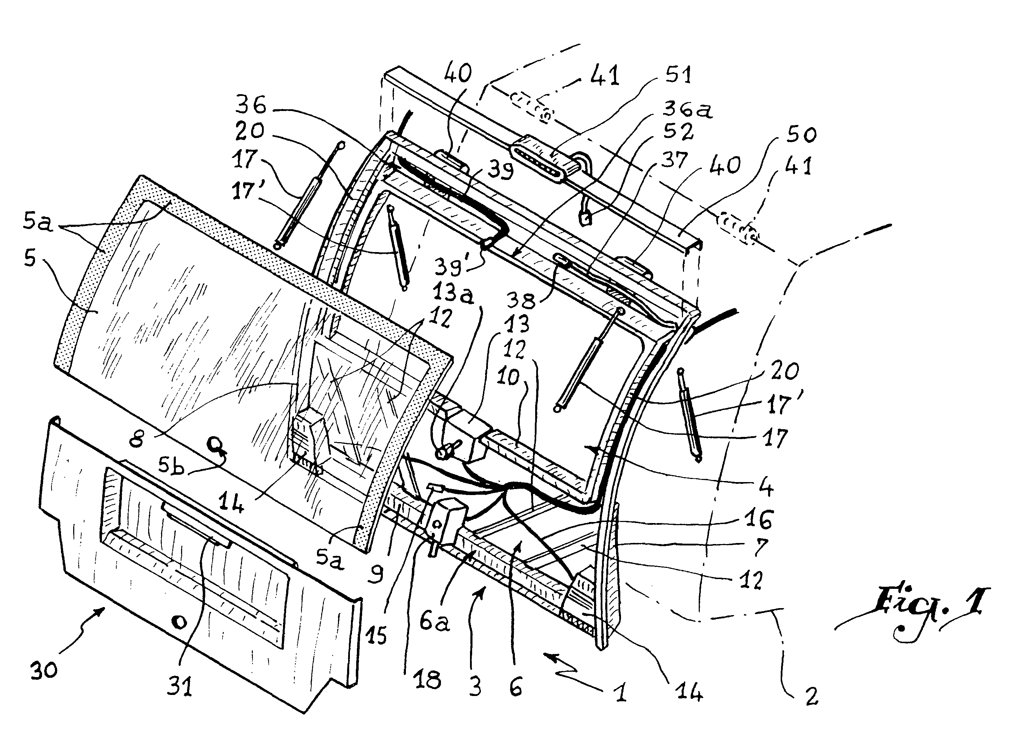

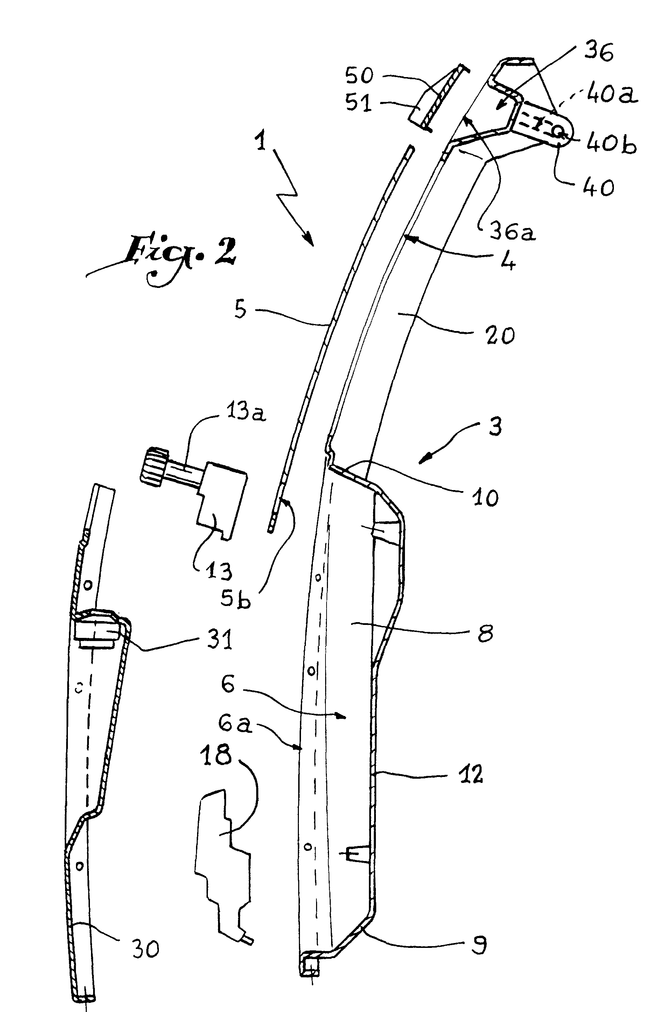

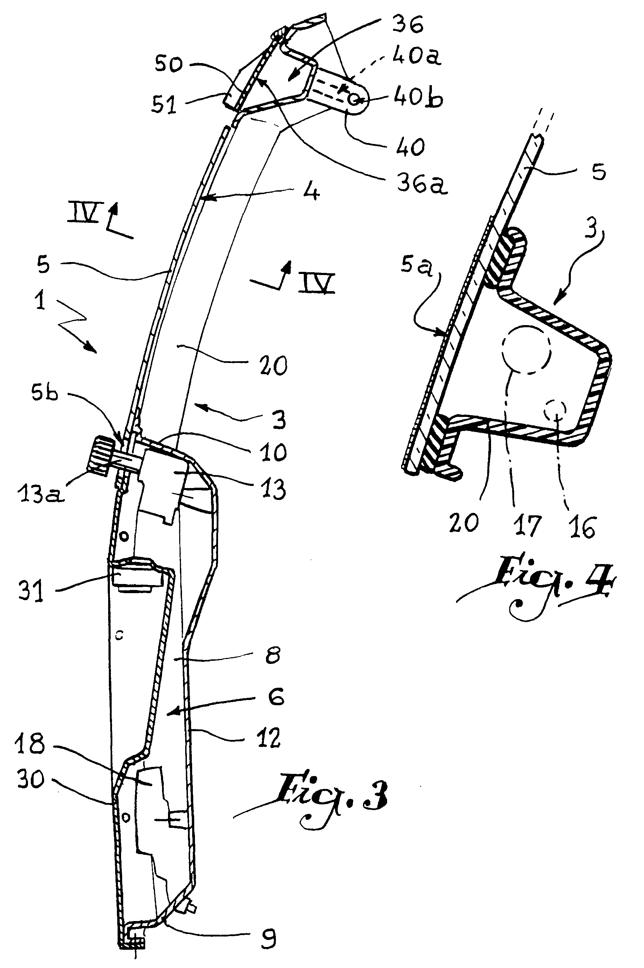

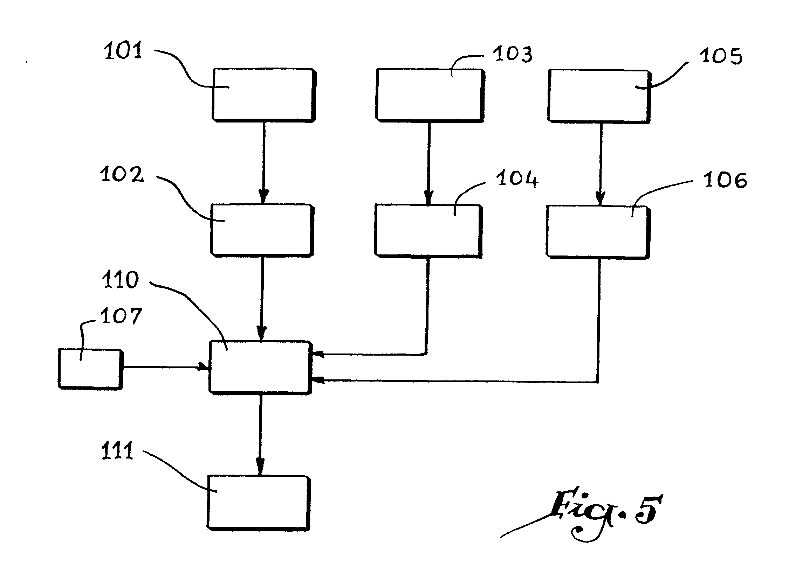

L'ouvrant représenté aux figures 1 à 4 est un hayon arrière 1 destiné à être articulé sur la caisse 2 d'un véhicule automobile de tout type, à usage personnel, professionnel ou militaire. Ce hayon comprend une armature 3 réalisée en résine thermodurcissable chargée en fibres de verre.

Cette armature est pourvue dans sa partie supérieure d'un orifice 4 destiné à être traversé par la lumière en vue de l'éclairage du volume intérieur du véhicule et à permettre une vision vers l'arrière aux occupants de celui-ci. Une vitre 5 est destinée à être montée sur l'armature 3 afin d'obturer l'orifice 4.

Dans sa partie inférieure, l'armature 3 présente une zone en creux, vu de l'extérieur, cette zone en creux définissant une chambre 6 dont la fonction sera expliquée plus en détail dans ce qui suit. La chambre 6 est bordée de deux voiles latéraux 7 et 8 et d'un voile inférieur 9. La chambre 6 est également bordée d'un voile supérieur 10 situé au voisinage du bord inférieur de l'orifice 4. Les voiles 7 à 10 sont globalement perpendiculaires à la surface principale du hayon 1. L'ouverture 6a de la chambre 6 est définie par les arêtes externes des voiles 7 à 10. Cette ouverture est tournée vers l'extérieur du hayon. Dans la chambre 6 sont prévues des nervures de rigidification 12 permettant de conférer à l'armature 3 une bonne résistance à la torsion et aux chocs.

Un moteur d'essuie-glace 13 est monté à l'intérieur de la chambre 6 à proximité du bord inférieur de l'orifice 4. Des blocs 14 de feux de signalisation sont également montés à l'intérieur de la chambre 6, à proximité des voiles latéraux 7 et 8. Un connecteur 15 est prévu pour l'éclairage d'une plaque minéralogique ; il est disposé, au moins temporairement, à l'intérieur de la chambre 6. Des faisceaux 16 d'alimentation électrique des éléments 13 à 15 circulent à l'intérieur de la chambre 6. Les faisceaux 16 transitent entre la caisse 2 du véhicule et la chambre 6 à travers un montant latéral 20 dont la section transversale est globalement en forme de C. Les faisceaux 16 pourraient également être répartis entre les deux montants latéraux 20 qui ont globalement la même section. Deux ressorts à gaz 17 sont logés dans les montants 20 et assistent l'utilisateur dans le mouvement de relevage de la vitre 5. Deux autres ressorts à gaz 17' sont disposés entre le hayon 1 et la caisse 2 et assistent le relevage du hayon. Une serrure 18 est prévue dans la chambre 6, à proximité du voile 9, pour le verrouillage du hayon 1 sur la caisse 2.

Un panneau de finition 30 est prévu pour être monté de façon amovible sur l'armature 3 de façon à obturer l'ouverture 6a de la chambre 6. Ce panneau de finition, dont l'aspect extérieur est adapté à la teinte et au style de la carrosserie du véhicule à laquelle appartient le hayon, est monté sur l'armature 1 après que les éléments 13 à 16 et 18 ont été mis en place à l'intérieur de la chambre 6 et du volume interne du montant latéral 20.

Le panneau de finition 30 peut être réalisé en matériau de moulage en feuilles ("SHEET MOLDING COMPONENT S.M.C."), en matériau de moulage en vrac ("BULK MOLDING COMPONENT - B.M.C."), en matériau de moulage en feuille à base de résine thermoplastique chargée en fibres de verre ("THERMOPLASTIQUE RENFORCE ESTAMPABLE" - TRE ou GMT) ou, plus généralement, en résine thermoplastique à faible retrait.

Le panneau 30 peut comporter des éléments de signalisation ou de sécurité tels qu'un dispositif d'éclairage 31 de plaque minéralogique destiné à être raccordé au connecteur 15 lors de la mise en place du panneau 30 sur l'armature 3.

Le panneau 30 est assemblé de manière amovible sur l'armature 3 par collage grâce à une colle semi-structurelle ou du mastic. D'autres moyens de fixation du panneau 30 sur l'armature 3 peuvent être envisagés et notamment des vis auto-taraudeuses, des écrous, etc.. Dans un tel cas, l'étanchéité entre le panneau 30 et l'armature 3 est assurée par un mastic. Lorsque le caractère démontable ou amovible du montage du panneau 30 n'est pas essentiel, on peut utiliser des rivets ou une colle structurelle à base de polyuréthane mono ou bi-composant.

A proximité de ses bords latéraux et de son bord supérieur, la vitre 5 est pourvue d'une zone opaque 5a dont la largeur est sensiblement égale à celle des montants 20. Ainsi, lorsque la vitre 5 a été collée ou fixée par tout autre moyen sur l'armature 3, la zone 5a masque l'intérieur des montants 20 et les équipements ou faisceaux qu'ils comprennent.

Dans sa partie centrale inférieure, la vitre 5 est pourvue d'un orifice 5b de passage de l'arbre de sortie 13a du moteur 13. Un essuie-glace est destiné à être monté à l'extrémité de l'arbre 13a après que la vitre 5 a été mise en place.

Lorsque l'assemblage de la vitre 5 et du panneau 30 sur l'armature 3 a été effectué, il contribue à la bonne tenue mécanique du hayon 1. En pratique, on a pu démontrer que la liaison de ces deux éléments participe à la résistance en torsion du hayon 1 pour environ 35%. Cependant, pour se conformer aux spécifications techniques de certains constructeurs automobiles, il est nécessaire de nervurer l'intérieur des montants 20 et de la chambre 6 pour assurer la résistance à la torsion de l'armature 3 seule.

Dans sa partie supérieure, l'armature 3 comprend une seconde chambre 36 s'étendant globalement horizontalement au-dessus de l'orifice 4. Cette chambre 36 est pourvue d'une ouverture 36a tournée vers l'extérieur du hayon 1. Dans cette chambre 36 peuvent être logés des câbles électriques 37 alimentant un connecteur 38 destiné à être branché sur un dispositif de signalisation, tel qu'un troisième feu stop, ou un système de dégivrage de la vitre 5. Un tuyau souple 38 est également logé dans la chambre 36 pour alimenter une buse 39 en produit de nettoyage de la vitre 5.

Deux pattes 40 sont prévues dans le fond de la chambre 36 en direction de la caisse 2 du véhicule pour constituer des éléments d'articulation du hayon 1 sur la caisse 2. Les pattes 40 sont venues de matière avec l'armature 3, donc particulièrement solides et de prix de revient faible.

Chaque patte 40 est pourvue d'un logement interne 40a débouchant dans la chambre 36, donc relativement facile à obtenir par moulage. Chaque logement interne 40a est relié à l'extérieur de la patte 40 à laquelle il appartient par un perçage 40b traversant la patte 40 de part en part, parallèlement à la dimension principale de la chambre 36. Grâce au perçage 40b, un axe d'articulation de la patte 40 sur une patte correspondante 41 de la caisse 2 peut être inséré dans le logement 40a.

Un bandeau 50 est prévu pour obturer l'ouverture 36a de la chambre 36. Ce bandeau peut être prévu aux couleurs de la carrosserie du véhicule ou dans une couleur spécifique, telle par exemple noir mat, de façon à conférer un effet spécifique à la carrosserie. Le bandeau 50 est équipé d'un troisième feu stop 51 qui peut être raccordé au connecteur 38 grâce à un second connecteur 52. Le bandeau 50 peut être fixé sur l'armature 3 par les mêmes moyens que le panneau 30.

Compte tenu de ce qui précède et en référence à la figure 5, on comprend que la fabrication du hayon 1 comprend une étape 101 de moulage de l'armature 3, suivie d'une étape 102 de pose des équipements 13 à 18, et 37 à 39. Parallèlement, le panneau de finition 30 peut être moulé dans une étape 103 et son aspect extérieur peut être modifié dans une étape de revêtement 104. De la même manière, le bandeau 50 peut être moulé dans une étape 105 et son aspect extérieur peur être traité dans une étape de revêtement 106. La vitre 5 est fabriquée dans une étape 107 qui peut avoir lieu dans un atelier de verrerie spécifique.

Dans une étape d'assemblage 110, la vitre 5, le panneau 30 et le bandeau 50 sont montés sur l'armature 3 comme indiqué précédemment.

Dans une étape ultérieure 111, le hayon 1 peut être installé sur la carrosserie 2 du véhicule ou emballé et expédié vers l'usine de montage du véhicule lorsqu'il est fabriqué dans un atelier différent du site de production des véhicules.

Compte tenu de ce qui précède, on comprend que lors de la pose des équipement des faisceaux 13 à 18, 37 et 38, les ouvertures 6a et 36a des chambres 6 et 36 sont complètement dégagées, de même que le canal intérieur des montants latéraux 20, de sorte que l'opérateur ou le robot manipulateur qui procède à cette pose a un accès aisé aux emplacements prévus de ces matériels. Ceci permet de diminuer sensiblement les temps de montage, d'améliorer les conditions de travail du personnel ou de simplifier les trajectoires d'un robot, et, par là même, de diminuer les risques d'erreur.

L'armature 3 peut être prévue en une ou plusieurs couleurs de base adaptées aux couleurs de l'habitacle du véhicule alors que les éléments 30 et 51 peuvent être peints à la demande en fonction des choix du futur propriétaire du véhicule. Le caractère composite de l'armature 3 lui permet de résister à des chocs dûs à des objets présents dans le coffre du véhicule. Par exemple, l'armature peut arrêter une bouteille de gaz roulant dans le coffre sans se détériorer alors qu'un panneau d'habillage pourrait être déformé localement par un tel objet lourd.

En outre, en cas de réparation et compte tenu du fait que les éléments 30 et 51 peuvent être montés de façon amovible sur l'armature 3, on peut prévoir de ne changer que ces éléments et éventuellement la vitre 5, ce qui diminue les frais de réparation.

L'invention a été présentée avec un hayon arrière de véhicule automobile. Cependant, elle est applicable à tout type d'ouvrants, qu'il s'agisse d'une porte latérale, d'un capot, d'un coffre arrière et plus généralement de toute partie mobile destinée à être articulée sur la caisse d'un véhicule automobile.

## Revendications

1. Procédé de fabrication d'un ouvrant (1) de véhicule automobile, qui consiste à réaliser (101) une armature (3) en matériau plastique composite comprenant au moins une chambre (6, 36) dont l'ouverture (6a, 36a) est tournée vers l'extérieur, à installer (102) sur l'armature (3) des équipements (13-15, 18, 38) et à monter (110) sur ladite armature un panneau de finition (30, 50) apte à obturer ladite ouverture de ladite chambre, **caractérisé en ce que** ces équipements (13-15, 18, 38) de signalisation ou de sécurité et/ou des faisceaux (16, 37, 39) d'alimentation d'équipements sont installés dans ladite chambre.

2. Procédé selon la revendication 1, **caractérisé** en qu'il comprend une étape (104, 106) de traitement de l'aspect dudit panneau de finition (30, 50) préalable à son montage (110) sur ladite armature (3).

3. Ouvrant (1) de véhicule automobile, comprenant une armature (3) en matériau plastique composite constituant la face interne dudit ouvrant, ladite armature définissant au moins une chambre ouverte (6, 36) dont l'ouverture (6a, 36a) est tournée vers l'extérieur, et au moins un panneau (30, 50) de finition, ledit panneau étant apte à être monté sur ladite armature de façon à obturer ladite ouverture de ladite chambre, **caractérisé en ce que** ladite chambre sert à la réception d'équipements (13-15, 18, 38) dudit ouvrant.

4. Ouvrant de véhicule automobile selon la revendication 3, **caractérisé en ce que** ladite armature (3) comprend un orifice (4) destiné à être fermé par une vitre (5), ledit orifice étant bordé par au moins un montant latéral (20), ledit montant latéral ayant une section transversale globalement en forme de C et recevant des équipements (17) de signalisation ou de sécurité et/ou des faisceaux (16) d'alimentation d'équipements.

5. Ouvrant de véhicule automobile selon la revendication 4, **caractérisé en ce que** ladite vitre (5) est opaque dans sa zone (5a) de recouvrement de chaque montant latéral (20).

6. Ouvrant de véhicule selon la revendication 3, **caractérisé en ce que** ladite armature (3) comprend des moyens (40) d'articulation sur la caisse (2) dudit véhicule, lesdits moyens étant ménagés dans le fond de ladite chambre (36).

7. Ouvrant de véhicule selon la revendication 3, **caractérisé en ce que** ladite armature définit une seconde chambre (36) de réception d'équipements (38) de signalisation ou de sécurité et/ou de faisceaux (37, 39) d'alimentation desdits équipements, un bandeau (50) étant apte à obturer une ouverture (36a) de ladite seconde chambre tournée vers l'extérieur.

8. Ouvrant de véhicule selon l'une des revendications 3 à 7, **caractérisé en ce que** ledit panneau de finition (30, 50) est monté de façon amovible sur ladite armature (3).

9. Ouvrant de véhicule selon l'une des revendications 3 à 8, **caractérisé en ce que** ladite armature (3) est réalisée en résine thermodurcissable chargée en fibres de renfort, en polypropylène chargé en fibres de renfort ou en résine thermoplastique chargée en fibres de renfort.

10. Véhicule automobile équipé d'un ouvrant selon l'une des revendications 3 à 9.

## Claims

1. Method of manufacturing a motor vehicle sliding roof (1), which consists in producing (101) a frame (3) formed from composite plastic material and comprising at least one chamber (6, 36), the opening of which (6a, 36a) is orientated outwardly, in installing (102) fittings (13 - 15, 18, 38) on the frame (3), and in mounting (110) on said frame a finishing panel (30, 50) capable of closing said opening of said chamber, **characterised in that** these fittings (13 - 15, 18, 38) for signalling or for security and/or bundles (16, 37, 39) for powering the fittings are installed in said chamber.

2. Method according to claim 1, **characterised in that** it comprises a stage (104, 106) of treating the appearance of said finishing panel (30, 50) prior to its being mounted (110) on said frame (3).

3. Motor vehicle sliding roof (1) comprising a frame (3) formed from composite plastic material which makes up the internal face of said sliding roof, said frame defining at least one open chamber (6, 36), the opening (6a, 36a) of which is turned outwardly, and at least one finishing panel (30, 50), said panel being capable of being mounted on said frame so as to close said opening of said chamber, **characterised in that** said chamber serves to accommodate fittings (13 - 15, 18, 38) of said sliding roof.

4. Motor vehicle sliding roof according to claim 3, **characterised in that** said frame (3) comprises an orifice (4) intended to be closed by a glass pane (5), said orifice being edged by at least one lateral strut (20), said lateral strut (20) having a cross-section which is on the whole C-shaped and accommodating fittings (17) for signalling or for security and/or bundles (16) for powering the fittings.

5. Motor vehicle sliding roof according to claim 4, **characterised in that** said glass pane (5) is opaque in its area (5a) which covers each lateral strut (20).

6. Vehicle sliding roof according to claim 3, **characterised in that** said frame (3) comprises means (40) for hinging on the body (2) of said vehicle, said means being provided in the base of said chamber (36).

7. Vehicle sliding roof according to claim 3, **characterised in that** said frame defines a second chamber (36) for accommodating fittings (38) for signalling or for security and/or bundles (37, 39) for powering said fittings, a moulding strip (50) being capable of closing an opening (36a) of said second chamber which is turned outwardly.

8. Vehicle sliding roof according to one of claims 3 to 7, **characterised in that** said finishing panel (30, 50) is mounted in a detachable manner on said frame (3).

9. Vehicle sliding roof according to one of claims 3 to 8, **characterised in that** said frame (3) is manufactured from heat-hardenable resin charged with reinforcing fibres, from polypropylene charged with reinforcing fibres or from thermoplastic resin charged with reinforcing fibres.

10. Motor vehicle fitted with a sliding roof according to one of claims 3 to 9.

## Patentansprüche

1. Verfahren zur Herstellung eines Kraftfahrzeugöffnungsteils (1), bei dem man einen Rahmen (3) aus Kunststoffverbundmaterial herstellt (101), der mindestens eine Kammer (6, 36) enthält, deren Mündung (6a, 36a) nach außen weist, am Rahmen (3) Einrichtungen (13 - 15, 18, 38) installiert (102) und am Rahmen ein Verkleidungspaneel (30, 50) anbringt (110), das die Mündung der Kammer verschließen kann, **dadurch gekennzeichnet, dass** diese Signal- oder Sicherheitseinrichtungen und/oder Kabelbäume (16, 37, 39) zur Versorgung von Einrichtungen in der:Kammer installiert sind.

2. Verfahren nach Anspruch 1, **dadurch gekennzeichnet, dass** es einen Schritt (104, 106) der ästhetischen Bearbeitung der Oberfläche des Verkleidungspaneels (30, 50) vor seiner Montage (110) an dem Rahmen (3) umfasst.

3. Kraftfahrzeugöffnungsteil (1), das einen Rahmen (3) aus Kunststoffverbundmaterial, der die Innenseite des Öffnungsteils bildet, wobei der Rahmen mindestens eine offene Kammer (6, 36) definiert, deren Mündung (6a, 36a) nach außen weist, und mindestens ein Verkleidungspaneel (30, 50) aufweist, wobei das Paneel so an dem Rahmen angebracht werden kann, dass es die Mündung der Kammer verschließt, **dadurch gekennzeichnet, dass** die Kammer zur Aufnahme von Einrichtungen (13 - 15, 18, 38) des Öffnungsteils dient.

4. Kraftfahrzeugöffnungsteil nach Anspruch 3, **dadurch gekennzeichnet, dass** der Rahmen (3) eine Öffnung (4) aufweist, die durch eine Fensterscheibe (5) geschlossen werden soll, wobei die Öffnung durch mindestens einen seitlichen (20) Holm begrenzt wird und der seitliche Holm einen allgemein C-förmigen Querschnitt aufweist und Signal- oder Sicherheitseinrichtungen (17) und/oder Kabelbäume (16) zur Versorgung der Einrichtungen aufnimmt.

5. Kraftfahrzeugöffnungsteil nach Anspruch 4, **dadurch gekennzeichnet, dass** die Fensterscheibe (5) in ihrem Bereich (5a) zur Abdeckung jedes seitlichen Holms (20) undurchsichtig ist.

6. Kraftfahrzeugöffnungsteil nach Anspruch 3, **dadurch gekennzeichnet, dass** der Rahmen (3) Mittel (40) zur Anlenkung an der Karosserie (2) des Fahrzeugs aufweist, wobei die Mittel im Boden der Kammer (36) ausgebildet sind.

7. Kraftfahrzeugöffnungsteil nach Anspruch 3, **dadurch gekennzeichnet, dass** der Rahmen eine zweite Kammer (36) zur Aufnahme von Signal- oder Sicherheitseinrichtungen (38) und/oder Kabelbäumen (37, 39) zur Versorgung der Einrichtungen definiert, wobei eine Blende (50) eine nach außen weisende Mündung (36a) der zweiten Kammer verschließen kann.

8. Kraftfahrzeugöffnungsteil nach einem der Ansprüche 3 bis 7, **dadurch gekennzeichnet, dass** das Verkleidungspaneel (30, 50) abnehmbar am Rahmen (3) angebracht ist.

9. Kraftfahrzeugöffnungsteil nach einem der Ansprüche 3 bis 8, **dadurch gekennzeichnet, dass** der Rahmen (3) aus mit Verstärkungsfasern gefülltem duroplastischem Harz, aus mit Verstärkungsfasern gefülltem Polypropylen oder aus mit Verstärkungsfasern gefülltem thermoplastischem Harz besteht.

10. Mit einem Kraftfahrzeugöffnungsteil nach einem der Ansprüche 3 bis 9 ausgestattetes Fahrzeug.
